# EUROPÄISCHE PATENTSCHRIFT

(11) **EP 0 515 783 B1**
(45) Veröffentlichungstag und Bekanntmachung des Hinweises auf die Patenterteilung: **23.02.1994**
(21) Anmeldenummer: 92104473.1
(22) Anmeldetag: 16.03.1992
(51) Int. Cl.: H02K 3/50, H02K 5/173

(54) **Anordnung zur Fixierung von Ankerwickelköpfen**
Rotor winding heads fixing device
Dispositif de fixation des têtes de bobinage d'un rotor

(30) Priorität: 25.05.1991 DE 4117193
(43) Veröffentlichungstag der Anmeldung: 02.12.1992
(73) Patentinhaber: Licentia Patent-Verwaltungs-GmbH, 60596 Frankfurt (DE)
(72) Erfinder: Zuckmantel, Lothar, W-2900 Oldenburg (DE)
(74) Vertreter: Vogl, Leo, Dipl.-Ing.

(56) Entgegenhaltungen:
- EP-A- 0 167 749
- DE-A- 3 629 049
- FR-A- 2 559 319
- SOVIET INVENTIONS ILLUSTRATED Section EI, Week 8734, 2. September 1987 Derwent Publications Ltd., London, GB; Class X, AN 241084

## Beschreibung

Die Erfindung betrifft eine Anordnung zur räumlichen Fixierung und Isolierung der Wickelköpfe von Ankerspulen der im Oberbegriff des Patentanspruchs 1 angegebenen Art (Siehe DE-A-3629049).

Die Gerätehersteller von Klimagebläsen, Lüfter usw. verlangen Elektromotore, welche einerseits sehr kompakt und von kurzer Baulänge sein sollen und andererseits aber eine hohe Leistung aufweisen. Bei derartigen leistungsstarken Elektromotoren von kurzer Baulänge ist es bekannt, die Lagereinheit mit in den Wicklungskopf zu verlegen. Diese Lager sind wegen der elektrischen Sicherheit von einer becherförmigen Scheibe umgeben, welche mit einer isolierenden Endscheibe an der Stirnfläche des lamellierten Läuferblechpaketes einstückig ausgebildet ist. Durch diese Scheibe wird der zur Verfügung stehende Raum für die Wickelköpfe derart gemindert, daß die die Wickelköpfe bildenden Stirnverbindungsleiter der Spulen teilweise bogenförmig verlaufen. Aufgrund dieser Wickelkopfausbildung ergibt sich eine verhältnismäßig große Baulänge in axialer und radialer Richtung. Außerdem bedingt der krumme Verlauf der Wicklungswindungen in den Wicklungsköpfen einen großen Aufwand an Wicklungswerkstoff.

Der Erfindung liegt die Aufgabe zugrunde, eine Anordnung zur Fixierung und Isolierung der Wickelköpfe von Ankerspulen zu schaffen, die den Bau einer preisgünstigen elektrischen Maschine von kurzer Baulänge und von großer Leistungsstärke ermöglicht. Außerdem soll das Kupfervolumen des Wickelkopfes verringert werden. Diese Aufgabe wird durch die im Patentanspruch 1 gekennzeichnete Erfindung gelöst.

Die erfindungsgemäße Anordnung ermöglicht eine Verringerung der Wicklungslänge und damit eine Kostenminderung. Da die Wicklungsbindungen in den Wicklungsklöpfen sehnenartig über die Stirnfläche des Scheibenteiles der Endscheibe verlaufen, erübrigen sich auch Nutenverschlußkeile zum Festlegen der Wicklungen in den Nuten des Blechpaketes.

Weitere vorteilhafte Ausgestaltungen sind den weiteren Unteransprüchen zu entnehmen.

Die Erfindung wird anhand eines Ausführungsbeispiels im folgenden näher beschrieben. Es zeigen:
- Figur 1: eine schaubildliche Darstellung eines Ankers,
- Figur 2: eine Endscheibe in Seitenansicht und
- Figur 3: eine Endscheibe gemäß Figur 2 in Draufsicht.

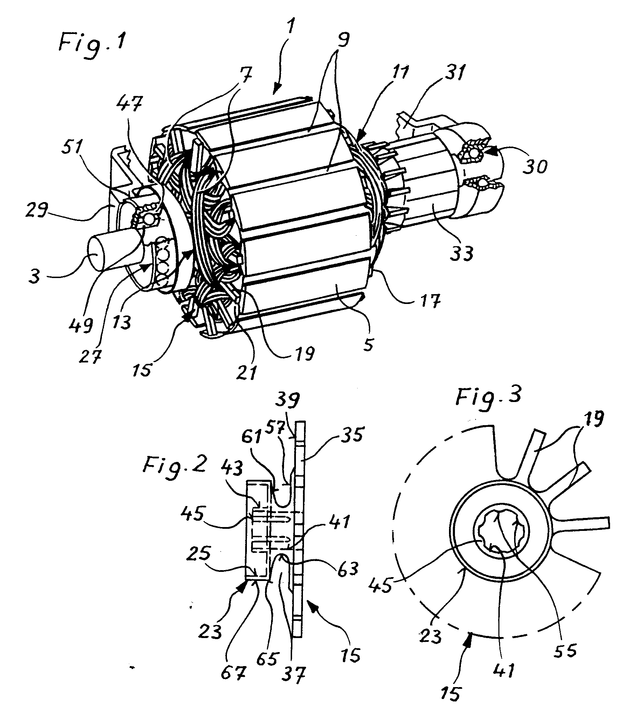

Die Figur 1 zeigt eine schaubildliche Darstellung eines Ankers 1 mit einem auf einer Ankerwelle 3 angeordneten zylindrischen Blechpaket 5, das am Umfang die Wicklungen von Ankerspulen aufnehmende, axial verlaufende Nuten 9 aufweist. Die Fixierung und Isolierung der Wickelköpfe 11 und 13 übernehmen Endscheiben 15, 17, welche stirnseitig vor dem Blechpaket 5 auf der Welle 3 mittels eines Preßsitzes befestigt sind. Die Endscheiben 15, 17 weisen radiale Stege 19 auf, welche die Zwischenstege 21 zwischen den Wicklungsnuten 9 in dem Blechpaket 5 abdecken. Darüberhinaus ist die Endscheibe 15 noch mit einem zylindrischen Ansatz 23 (Fig.2) versehen, welcher mit einer zylinderförmigen Ausnehmung 25 zur Aufnahme eines Teiles eines Lagers 27 für die Welle 3 versehen ist. Das Lager 27 stützt sich in bekannter Weise in einem Lagerschild 29 ab. Außerdem ist die Welle 3 auf der anderen Seite mit einem Lager 30 in einem Lagerschild 31 gelagert. Ebenfalls ist die Welle 3 auf dieser Seite noch mit einem Kommutator 33 fest verbunden, mit dem die Ankerspulen elektrisch verbunden sind.

Die Endscheibe 15 besteht aus einem Scheibenteil 35 mit den radialen Stegen 19 und dem zylindrischen Ansatz 23, wobei zwischen dem Scheibenteil 35 und dem Ansatz 23 eine U-förmige, umlaufende Nut 37 zur Aufnahme von Ankerwicklungen angeordnet ist. Hierdurch ist es möglich, daß die Wicklungswindungen der Ankerwicklungen sehnenartig über die Stirnfläche 39 des Scheibenteiles 35 der Endscheibe 15 verlaufen. Hierdurch wird weniger Wicklungslänge benötigt, was auch zu einer Verringerung des Kupfervolumens führt.

Das zentrisch in der Endscheibe 15 integriert angeordnete Lager 41 ragt mit einem zylindrischen, inneren Kragen 43 in die Ausnehmung 25, welcher eine ringförmige Anschlagkante 45 für das Lager 27 auf der Welle 3 aufweist. Hierdurch wir die Lage des Lagers 27 auf der Welle 3 genau festgelegt, so daß sich ein Sicherungsring erübrigt. Das Lager 27 besteht übrigens aus einem Kugellager, dessen Innenring 49 an der Anschlagkante 45 anlegt. Der Außenring 47 des Kugellagers (27) ragt soweit aus dem zylindrischen Ansatz heraus, daß noch eine sichere Lagerung in einem Lager 51 eines Lagerschildes 29 gewährleistet wird.

Die axiale Sicherung der Endscheibe 15 auf der Welle 3 erfolgt durch vorstehende Längsrippen 55 in der Lagerbohrung 41 der Endscheibe 15, wodurch ein Preßsitz erzeugt wird. Die Endscheibe 15 besteht übrigens aus einem Isoliermaterial und ist ein Kunststoffspritzteil aus PPS.

Ein Schenkel 57 der U-förmigen Nut 37 in der Endscheibe 15 wird durch die Stirnfläche 39 an dem Scheibenteil 35 gebildet, während der andere Schenkel 61 von dem eine Rundung aufweisenden Nutengrund 63 konisch nach außen verläuft. Dieser Schenkel 61 geht über eine Abrundung 65 in die Außenumfangsfläche 67 des zylindrischen Ansatzes 23 über.

Die beschriebene Fixierung des Wickelkopfes 13 mittels der Endscheibe 15 mit dem zylindrischen Ansatz 23 und der Nut 37 ermöglicht die Ausbildung eines leistungsstarken Elektromotors mit kurzer Baulänge. Durch die Reduzierung des Wickelkopfes 13 in radialer und axialer Richtung wird außerdem Kupfer in erheblichem Maße eingespart. Durch die zweckmäßige Gestaltung des Wickelkopfes 13 mit den sehnenartigen Wicklungswindungen auf der Stirnseite 39 der Endscheibe 15 erübrigen sich auch Nutenverschlußkeile in den Nuten 9 des Blechpaketes 5.

## Patentansprüche

1. Anordnung zur räumlichen Fixierung und Isolierung der Wickelköpfe (11) von Ankerspulen mittels stirnseitig auf einem auf einer Welle (3) aufgepreßten Blechpaket (5) angeordneten, aus Isolierstoff bestehenden Endscheiben (15,17), welche die Zwischenstege von am Umfang axial verlaufenden Wicklungsnuten in dem zylindrischen Blechpaket abdeckende, radiale Stege (19) und einen von den Wickelköpfen umgebenen, nach außen gerichteten zylindrischen Ansatz (23) aufweisen, **dadurch gekennzeichnet,** daß der zylindrische Ansatz (23) der Endscheibe (15), die auf der der Seite der Welle (3) mit einem darauf befestigten Kommutator (33) gegenüberliegenden Seite mittels eines als Preßsitz ausgebildeten Lagers auf der Welle angeordnet ist, eine zylinderförmige Ausnehmung (25) zur Aufnahme eines Teiles eines Lagers (27) für die Welle (3) aufweist und daß zwischen dem Scheibenteil (35) mit den radialen Stegen (19) der Endscheibe (15) und dem zylindrischen Ansatz (23) eine U-förmige, umlaufende Nut (37) zur Aufnahme von Ankerwicklungen vorhanden ist, derart, daß deren Wicklungswindungen sehnenartig über die Stirnfläche (39) des Scheibenteiles (35) der Endscheibe (15) verlaufen.

2. Anordnung nach Anspruch 1, **dadurch gekennzeichnet,** daß das zentrisch in der Endscheibe (15) integriert angeordnete Lager (41) mit einem zylindrischen Kragen (43) in die Ausnehmung (25) ragt, welcher eine Anschlagkante (45) für das Lager (27) der Welle (3) aufweist.

3. Anordnung nach Anspruch 2**, dadurch gekennzeichnet,** daß das Lager (27) der Welle (3) aus einem Kugellager besteht, dessen Innenring (47) an der umlaufenden Anschlagkante (45) anliegt.

4. Anordnung nach Anspruch 2 oder 3, **dadurch gekennzeichnet,** daß das Lager (41) in der Endscheibe (15) zur Erzielung des Preßsitzes vorstehende Längsrippen (55) aufweist.

5. Anordnung nach Anspruch 1 oder 2, **dadurch gekennzeichnet,** daß ein Schenkel (57) der U-förmigen Nut (37) in der Endscheibe (15) parallel zu der Stirnfläche (39) des Scheibenteiles (35) ausgebildet ist und daß der andere Schenkel (61) von dem eine Rundung aufweisenden Nutengrund (63) konisch nach außen verläuft.

6. Anordnung nach Anspruch 5, **dadurch gekennzeichnet,** daß der konisch nach außen verlaufende Schenkel (61) der Nut (37) über eine Abrundung (65) in die Außenumfangsfläche (67) des zylindrischen Ansatzes (23) übergeht.

7. Anordnung nach einem der vorhergehenden Ansprüche**, dadurch** **gekennzeichnet**, daß die Endscheibe (15) ein Kunststoffspritzteil aus PPS ist.

## Claims

1. Arrangement for the spatial fixing and insulating of the winding ends (11) of armature coils by means of end plates (15, 17), which consist of insulating material, are arranged at the ends on a lamination body (5) pressed onto a shaft (3) and which have radial webs (19) covering the intermediate webs of winding grooves, which extend axially at the circumference, in the cylindrical lamination body and an outwardly directed cylindrical projection (23) surrounded by the winding ends, characterised thereby that the cylindrical projection (23) of the end plate (15), which at the end of the shaft (3) opposite the end with a commutator (33) fastened thereon is arranged on the shaft by means of bearing constructed as a press seat, has a cylindrical recess (25) for the reception of a part of a bearing (27) for the shaft (3), and that a U-shaped encircling groove (37) for the reception of armature windings is present between the disc part (35), with the radial webs (19), of the end plate (15) and the cylindrical projection (23) in such a manner that the winding turns of the windings extend chord-like over the front face (39) of the disc part (35) of the end plate (15).

2. Arrangement according to claim 1, characterised thereby that the bearing (41) arranged centrally integrated in the end plate (15) projects into the recess (25), which has an abutment edge (45) for the bearing (27) of the shaft (3), by a cylindrical collar (43).

3. Arrangement according to claim 2, characterised thereby that the bearing (27) of the shaft (3) consists of a ball bearing, the inner race (47) of which rests against the encircling abutment edge (45).

4. Arrangement according to claim 2 or 3, characterised thereby that the bearing (41) in the end plate (15) has projecting longitudinal ribs (55) for achieving of the press seat.

5. Arrangement according to claim 1 or 2, characterised thereby, that a limb (57) of the U-shaped groove (37) in the end plate (15) is formed parallel to the front face (39) of the disc part (35) and the other limb (61) extends conically outwards from the groove base (63), which is radiussed.

6. Arrangement according to claim 5, characterised thereby that the conically outwardly extending limb (61) of the groove (37) merges into the outer circumferential surface (67) of the cylindrical projection (23) by way of a radiussing (65).

7. Arrangement according to one of the preceding claims, characterised thereby that the end plate (15) is an injection moulded part of PPS.

## Revendications

1. Dispositif destiné à fixer dans l'espace et à isoler les têtes d'enroulement (11) de bobines d'induit au moyen de disques d'extrémité (15, 17) faits d'une matière isolante, placés frontalement sur un paquet de tôles (5) pressé sur un arbre (3), lesquels disques présentent des cloisons radiales (19) recouvrant les cloisons intermédiaires de rainures d'enroulement, s'étendant axialement sur la périphérie, dans le paquet de tôles cylindriques, ainsi qu'un appendice (23) cylindrique dirigé vers l'extérieur, entouré par les têtes de bobines, caractérisé en ce que l'appendice (23) cylindrique du disque terminal (15), qui est placé sur l'arbre, sur le côté opposé au côté de l'arbre (3) avec un commutateur (33) fixé sur celui-ci, au moyen d'un palier ajusté serré, présente un évidement (25) cylindrique destiné à loger une partie d'un palier (27) pour l'arbre (3) et en ce qu'entre la partie de disque (35) avec les cloisons radiales (19) du disque terminal (15) et l'appendice (23) cylindrique il existe une rainure (37) en U, continue, destinée à loger des enroulements d'induit de manière que ses spires s'étendent à la manière de cordes sur la face frontale (39) de la partie de disque (35) du disque d'extrémité (15).

2. Dispositif selon la revendication 1, caractérisé en ce que le palier (41), intégré au centre du disque terminal (15) s'engage dans l'évidement (25) avec un collet (43) cylindrique qui présente un bord de butée (45) pour le palier (27) de l'arbre (3).

3. Dispositif selon la revendication 2, caractérisé en ce que le palier (27) de l'arbre (3) est fait d'un roulement à billes dont la bague intérieure (47) s'applique contre le bord de butée (45) continu.

4. Dispositif selon les revendications 2 ou 3, caractérisé en ce que le palier (41) présente des nervures longitudinales (55) faisant saillie dans le disque terminal (15), pour obtenir l'ajustement serré.

5. Dispositif selon les revendications 1 ou 2, caractérisé en ce qu'une branche (57) de la rainure (37) en U pratiquée dans le disque d'extrémité (15), est parallèle à la face frontale (39) de la partie de disque (35) et en ce que l'autre branche (61) s'étend coniquement vers l'extérieur à partir d'un fond de rainure (63) présentant un arrondi.

6. Dispositif selon la revendication 5, caractérisé en ce que la branche (61) s'étendant coniquement vers l'extérieur, de la rainure (37), se prolonge par un arrondi (65) dans la surface périphérique extérieure (67) de l'appendice (23) cylindrique.

7. Dispositif selon l'une des revendications précédentes, caractérisé en ce que le disque d'extrémité (15) est un élément en matière plastique moulé par injection, en PPS.
